# EUROPEAN PATENT SPECIFICATION

(11) **EP 2 716 454 B1**
(45) Date of publication and mention of the grant of the patent: **23.03.2016**
(21) Application number: 12425162.0
(22) Date of filing: 04.10.2012
(51) Int. Cl.: B32B 37/20, B32B 5/24

(54) **A method for hot laminating layers of thermoplastic materials**
Verfahren zum Heißlaminieren von Schichten aus thermoplastischen Materialien
Procédé de laminage à chaud de couches de matériaux thermoplastiques

(43) Date of publication of application: 09.04.2014
(73) Proprietor: Comerio Ercole S.p.A., 21052 Busto Arsizio (Varese) (IT)
(72) Inventor: Lualdi, Renato, 20152 Busto Arsizio (VA) (IT); Marcora, Roberto, 21052 Busto Arsizio (VA) (IT)
(74) Representative: Spina, Alessandro

(56) References cited:
- WO-A1-99/46119
- WO-A2-2011/009997
- US-A1- 2011 094 669
- US-A1- 2012 063 706

## Description

The present invention generally relates to the field of multilayer products and in particular to a method for hot laminating superimposed breathable and barrier layers by simultaneously applying high temperature and pressure over distinct zones for manufacturing a multilayer product.

It is known that multilayer products made of non-woven synthetic textile materials may be manufactured by joining together a plurality of layers over bond zones or spots rather than on their entire surface. This allows to obtain desired technical characteristics such as mechanical strength, absorbency and the like, while maintaining flexibility, softness and "textile hand" that are comparable to those of fabrics made of natural fibers.

Multilayer products having layers joined over bond zones are generally manufactured through special hot lamination processes, wherein an embossing pattern is pressed on the layers to be joined. Hot lamination is usually carried out by way of special calenders comprising a pair of counter-rotating cylinders, with parallel axes, between which the layers to be joined are made to pass. Typically, one of the two cylinders is provided on its mantle with an embossing pattern comprising a plurality of reliefs in the form of cusps, segments or continuous reliefs, whereas the mantle of the other cylinder is smooth. There are also known calenders for hot lamination, wherein both cylinders are provided with embossing patterns.

During the lamination process, the two cylinders are heated at temperatures close to the softening temperature of the materials forming the layers to be processed and pressed against one another. The high temperatures of the cylinders and the mechanical compression locally cause an irreversible transition of thermoplastic polymers forming the individual layers from an amorphous to a crystalline state, thus generating a bonding effect on the layers to be joined. There are thus obtained multilayer products comprising a pattern of bond zones corresponding to the positions of the reliefs of the embossing pattern.

A multilayer product joined over bond zones has morphological characteristics that make it substantially comparable to a monolayer product.

The patent publication WO 99/46119 discloses, for example, a multilayer product for the manufacturing of absorbent articles comprising a supporting layer made of a non-woven fabric and at least one layer of carded fibers, which are joined to each other by calendering them through heated cylinders.

The patent publication US 2001/0045260 discloses a method for the manufacturing of layers made of a non-woven fabric obtained by way of meltblowing processes suitable to provide these layers with characteristics of high vapor permeability and low liquid permeability. To this aim, the method comprises a calendering step carried out after the meltblowing process at temperatures suitable to soften only the polymer crystals of a smaller size but not those of a larger size, thus allowing to provide the layers of the non-woven fabric with a high vapor permeability and a low liquid permeability. The method also concerns the manufacturing by hot laminating of multilayer products made by joining together in a continuous manner the layers of non-woven fabric thus manufactured with layers of meltblown non-woven fabric obtained by spunbonding. Another method is known from US 2011/0094669 A1.

In the manufacturing of water-impermeable garments or technical equipment there are instead most frequently used multilayer products with barrier function comprising at least one barrier layer, consisting of a film of a thermoplastic material impermeable to liquids but permeable to gases, and one or more breathable layers, or veils, made of a non-woven fabric of thermoplastic synthetic fibers e.g. made of polyolefin materials.

These multilayer products with a barrier function are generally manufactured by joining the layers through hot calendering processes, wherein one of the two cylinders is provided on its mantle with an embossing pattern comprising a plurality of reliefs, whereas the other is smooth.

A problem of this hot lamination technology for multiplayer products comprising breathable and barrier layers is that operating temperatures of the cylinders of the calender that are too high, which as explained before are close to the softening temperatures of the polymeric materials forming the layers, may cause an irreversible transition of the polymers from the amorphous to the crystalline state over the entire surface of the outermost layers, in particular of the layer contacting the smooth cylinder of the calender.

This problem is well known in the field under the name of "filming effect of the outer layers" and negatively affects the characteristics of the finished product in particular as to textile hand and breathability.

Moreover, given the different structure of the radiating surfaces of the two cylinders of the calender, one embossed and the other one smooth, in order to achieve an adequate bonding action it is necessary to have two different operating temperatures, which results in the use of two thermal power sources with separate circuits. In particular, the embossed cylinder is maintained at a higher temperature with respect to the smooth cylinder. This implies a duplication of the systems for regulating the temperature of the cylinders and higher operating costs.

Another problem is that the maximum depth of the reliefs of the embossing pattern is limited to a few tenths of a millimeter, typically 0.9 mm, whereby it is relatively difficult to produce thick multilayer products. In order to solve this problem it is necessary to raise the operating temperatures of the cylinders of the calender, which, as explained above, may negatively affect the characteristics of the finished product in particular as to textile hand and breathability.

In addition or as an alternative to increasing the operating temperatures, it is possible to increase the pressure between the cylinders, which may however result in the formation of microcracks in the layers, in particular in the barrier layer, which can poorly withstand mechanical and thermal stresses.

There is thus a need to provide a method of hot laminating over bond zones multilayer products comprising at least one barrier layer and one or more breathable layers made of a non-woven fabric, which allows to overcome the technological limits indicated above, which constitutes an object of the present invention.

It is also an object of this invention to provide a hot laminating method that allows to reduce the manufacturing costs of such multilayer products. A solution to the above problems is proposed with the method of claim 1.

An idea of solution underlying the present invention is to carry out hot lamination of a barrier layer with one or more breathable layers of a non-woven fabric by calendering, by using a calender in which both cylinders are provided with an embossing pattern. The inventors have in fact found that this solution, which is already known per se in the manufacturing of multilayer non-woven fabrics, allows to obtain remarkable improvements in the manufacturing of multilayer products comprising layers with barrier function coupled to layers made of a non-woven fabric.

On the one hand, the presence of an embossing pattern on both the cylinders of the calender greatly reduces the size of the contact surface area between each cylinder and the multilayer product being processed, thus allowing to minimize the risk that entire portions of the breathable layers undergo a structural change due to the transition of the polymers that form them from the amorphous to the crystalline state, which penalizes the characteristics of breathability due to the above-mentioned filming effect. Furthermore, the double embossing pattern configuration allows to reduce the operating temperatures of the cylinders of the calender and the compressive forces among the cylinders, thus making the manufacturing process of the multilayer product generally cheaper.

On the other hand, the presence of an embossing pattern on both cylinders makes the surface areas of their radiating surfaces substantially equal to each other, so that it is possible to operate the cylinders at the same temperature, thus using a single thermal unit for their heating. This also contributes to the cost effectiveness the hot laminating process and therefore to reduce the manufacturing costs of the multilayer product.

The use of embossing patterns on both laminating cylinders also allows to double the pressing depth of the layers to be joined and therefore to increase the maximum achievable thickness of the resulting (uncompressed) multilayer product compared to the thickness that may be obtained in hot laminating apparatuses comprising a smooth cylinder.

Hot laminating of the multilayer product is carried out by using embossing patterns comprising a plurality of grooves that define continuous reliefs on the mantles of the cylinders, for example helical continuous reliefs. This configuration allows to minimize the problem of the formation of microcracks in the layers of the multilayer product, which is of the utmost importance in order to preserve the barrier properties of the barrier layers.

A further advantage offered by the invention is that the use of continuous helical reliefs allows to obtain on the finished multilayer a plurality of parallel grooves spaced by ridges, which allow the circulation of air when the multilayer product is in contact with other layers of fabric, e.g. in a finished garment.

Further advantages and features of the hot laminating method over bond zones according to the present invention will become clear to those skilled in the art from the following detailed and non-limiting description of embodiments thereof with reference to the accompanying drawings in which:
- Figures 1a and 1b schematically show a front view and a side view of a pair of cylinders of a calender of an apparatus for laminating over bond zones according to an embodiment of the method of the present invention;
- Figures 2a and 2b schematically show a front view and a side view of a pair of cylinders of a calender of an apparatus for laminating over bond zones according to an alternative embodiment of the method of the present invention; and
- Figures 3a and 3b schematically show a front view and a side view of a pair of cylinders of a calender of an apparatus for laminating over bond zones according to a further embodiment of the method of the present invention.

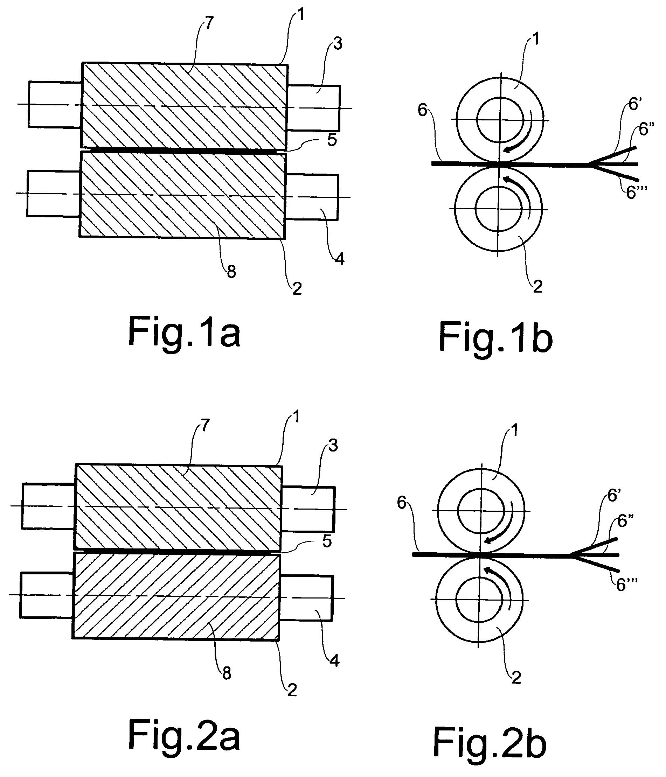

Figures 1a and 1b schematically show a front view and a side view of a pair of cylinders 1, 2 of a calender (not shown) of a generic apparatus for hot laminating over bond zones (not shown).

The cylinders 1, 2 are parallel to one another and respectively rotatably mounted on shafts 3, 4 adapted to be driven in opposite rotation directions. In a non-operating condition of the calender, i.e. in the absence of a fed product, the cylinders 1, 2 are in contact with each other. During the laminating process, a lamination gap 5 is formed between the cylinders 1, 2 due to the passage of a plurality of superimposed layers intended to form a multilayer product 6. The height of the lamination gap 5 depends on the overall thickness of the superimposed layers forming the multilayer product being processed and on the compressive force that the cylinders exert against one another.

The multilayer 6 comprises one or more outer layers made of a non-woven fabric e.g. made by spunbonding of thermoplastic fibers, such as polyolefin fibers, which is joined to at least one barrier layer consisting of a thermoplastic film, e.g. a polyolefin film, that is impermeable to liquids but permeable to gases.

In the figures two outer layers of the multilayer 6 respectively designated by reference numerals 6' and 6"' are shown, while the inner layer is indicated with reference numeral 6".

According to the present invention, calendering of the multilayer 6 is carried out by using a calender wherein both cylinders are provided with an embossing pattern, thus allowing to join together the layers 6', 6", 6"' of the multilayer product 6 by pressing the embossing patterns simultaneously on its opposite faces.

During the lamination process, the two cylinders 1, 2 are heated at temperatures close to the softening temperature of the materials forming the layers to be processed and pressed against one another. The operating temperature varies from about 120°C, in the case of polyethylene layers, to about 240°C, in the case of polyester layers, which are the materials most widely used in multilayer products having a barrier function.

The operating temperature of the cylinders 1, 2 is preferably the same, which is possible thanks to the presence of embossing patterns on both of them, making their heat exchange surfaces substantially equal to each other, and allowing to use a single thermal unit for their heating.

As shown in Figure 1b, the layers 6', 6", 6'" of the multilayer product 6 to be joined are fed from a remote location between the cylinders 1, 2 in correspondence of the lamination gap 5 preferably in the form of strips superimposed to each other.

The cylinders 1, 2, which, as known rotate in opposite directions, drag the layers 6', 6", 6'" through the lamination gap 5, which are thus joined to each other forming the multilayer product 6 thanks to the mechanical compression and the high temperatures of the cylinders 1, 2.

According to a preferred embodiment of the method of the invention, hot laminating is carried out by way of embossing patterns comprising a plurality of grooves 7, 8 that define continuous reliefs on the cylinders. In the figures the grooves 7, 8 are schematically shown by way of solid lines.

The configuration of the embossing patterns of the cylinders 1, 2 characterized by continuous reliefs is particularly advantageous, because it allows to minimize the risk of formation of microcracks in the layers 6', 6", 6"', in particular in the barrier layer 6", during the their compression in correspondence of the lamination gap 5. The use of continuous reliefs also allows to make embossing patterns deeper than those comprising cusp-shaped elements or segments, for example up to 2 mm, and therefore to manufacture multilayer products 6 having a thickness higher than known multilayer products.

In the embodiment shown in Figures 1a and 1b, the grooves 7, 8 form on the mantles of the respective cylinders 1, 2 continuous reliefs having the same helical pitch, for example in the order of 0.6 - 0.7 mm, and the same winding direction. The bonding zones between the layers 6', 6", 6'" of the multilayer product 6 will thus have a substantially rhomboidal geometry, as it results from the intersection of continuous reliefs of the two cylinders 1, 2 in correspondence of the lamination gap 5.

In the alternative embodiment shown in Figures 2a and 2b, the profiles formed by grooves 7, 8 on the cylinders 1, 2 still have the same helical pitch, but, contrary to the embodiment illustrated in Figures 1a, 1b, they have opposite winding directions around the cylinders 1, 2. Therefore in this case the layers will not be joined over bond zones but along lines, because the helical reliefs formed on the mantles of the two cylinders continuously overlap each other at the lamination gap 5.

More generally, the configuration of the continuous profiles is preferably chosen so that the theoretical plane on which lie pairs of the generating lines of the reliefs of the cylindrical surfaces of the mantles of the two cylinders 1, 2 that face each other at the lamination gap 5 intercepts a plurality of crossovers of the continuous reliefs. This makes the elastic reaction force of the cylinders along the lamination gap 5 uniform, thus avoiding to cause perturbations in the hydraulic system controlling the position of the cylinders 1, 2 of the calender, i.e. the height of the lamination gap 5 defined between them, which could cause defects in the multilayer product 6.

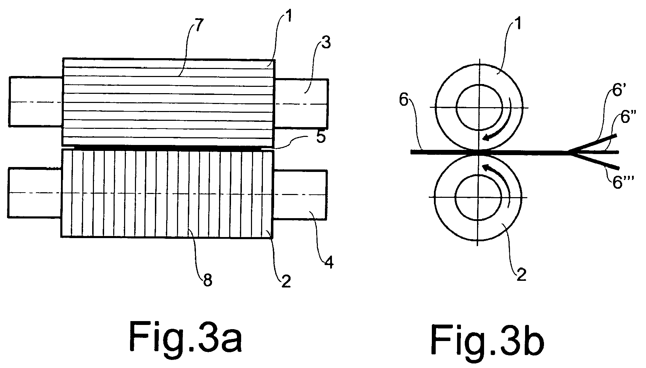

In the embodiment shown in Figures 3a and 3b, the grooves 7, 8 of the cylinders 1, 2 form instead continuous reliefs that are arranged parallel to the rotation axis and along the circumferential direction, respectively. In this case, the profiles will cross each other perpendicularly at the lamination gap 5, thus defining a plurality of bonding zones having a substantially square shape. This embodiment represents a limit condition of the inclination angle of the continuous reliefs with respect to the axis of their respective cylinders, when observed on an elevation view, the angles being 0° and 90°, respectively. This limit condition may result in a variable elastic reaction force when the layers pass through the lamination gap 5 between the cylinders 1, 2, because the crossovers between the reliefs of the two embossing patterns are not constant but periodic, there occurring an overlapping operating condition alternated to a nonoverlapping operating condition.

It is clear that the embodiments of the invention herein described and illustrated are only examples susceptible of numerous variants. For example, it is possible to vary the distance between the grooves 7, 8, as well as to change their width, thus defining different pitches in the continuous helical reliefs and different sizes of the resulting embossing pattern of the finished multilayer product. This also allows to create more or less dense bond zones between the layers 6', 6", 6"' and then to manufacture multilayer products 6 with different characteristics in terms of flexibility, softness, textile hand and breathability depending on their intended use. It is also possible to vary the inclination angle of the grooves 7, 8 with respect to the axis of the cylinders, thus allowing to modify the shape of the bonding zones and to create different aesthetic effects on multilayer products 6.

## Claims

1. A method of hot laminating multilayer products (6) comprising at least one barrier layer (6") formed of a film made of a liquid impermeable thermoplastic polymeric material and at least one breathable layer (6', 6"') made of a non-woven fabric made of thermoplastic polymeric fibers, wherein said layers (6', 6", 6"') are hot laminated by way of a calender comprising a pair of counter-rotating cylinders (1, 2) with parallel axes, the mantle surfaces of which define a lamination gap (5) therebetween, said method comprising the steps of:
- forming embossing patterns on the mantle surfaces of both cylinders (1, 2), each embossing pattern comprising grooves (7, 8) defining therebetween continuous reliefs on the mantles of the two cylinders (1, 2), linearly extending at different or complementary angles of inclination with respect to the axes of the respective cylinders, as observable on an elevation view of the cylinders;
- heating said cylinders (1, 2) at a temperature sufficient to soften the polymeric material of the layers (6', 6", 6"') pinched at crossovers of said continuous reliefs of the mantles of the two cylinders (1, 2) when the layers pass through said lamination gap (5); and
- forming bond zones between adjacent layers (6', 6", 6"') at said crossovers of the continuous reliefs of the cylinder mantles.

2. A lamination method according to claim 1, wherein the mantles of the cylinders (1, 2) are heated at the same temperature.

3. A lamination method according to claim 1 or 2, wherein said different angles of inclination are comprised between 0° and 90°.

4. A lamination method according to any one of claims 1 to 3, wherein the reliefs are configured such that the theoretical plane on which lie pairs of the generating lines of the reliefs of the cylindrical surfaces of the mantles of the two cylinders (1, 2) that face each other at the lamination gap (5) intercepts a plurality of crossovers of said continuous reliefs.

5. A lamination method according to claim 4, wherein said grooves (7, 8) form continuous helical reliefs on the mantles of their respective cylinders (1, 2).

6. A lamination method according to claim 5, wherein said continuous helical reliefs have the same pitch and opposite winding directions on the mantles of the two cylinders (1, 2).

7. A lamination method according to claim 5, wherein said continuous helical reliefs have the same pitch and the same winding directions on the mantles of the two cylinders (1, 2).

## Patentansprüche

1. Ein Verfahren zum Heißlaminieren von Produkten (6) mit mehreren Schichten, umfassend wenigstens eine aus einem Film eines flüssigen, undurchdringlichen, thermoplastischen Polymermaterials gebildete Sperrschicht (6") sowie wenigstens eine aus einem Vliesstoff von thermoplastischen Polymerfasern gebildete, atmungsaktive Schicht (6', 6"'), wobei die besagten Schichten (6', 6", 6"') heißlaminiert sind unter Verwendung eines Kalanders, umfassend ein Paar von entgegengesetzt rotierenden Walzen (1, 2) mit parallelen Achsen, deren Mantelflächen einen zwischen angeordneten Laminierspalt (5) begrenzen, wobei das Verfahren die folgenden Schritte umfasst:
- Ausbilden von Prägemustern auf den Mantelflächen beider Walzen (1, 2), wobei jedes Prägemuster Nuten (7, 8) umfasst, zwischen denen auf den Mänteln der beiden Walzen (1, 2) kontinuierliche Erhebungen abgegrenzt werden, welche sich linear unter verschiedenen oder komplementären Neigungswinkeln gegenüber den Achsen der betreffenden Walzen erstrecken, wie auf einer Draufsicht auf die Walzen erkennbar ist;
- Heizen der besagten Walzen (1, 2) auf eine ausreichende Temperatur, um das Polymermaterial der Schichten (6', 6", 6"') zu erweichen, welche an Kreuzungsbereichen der besagten, kontinuierlichen Erhebungen auf den Mänteln der beiden Walzen (1, 2) gequetscht werden, wenn die Schichten durch den besagten Laminierspalt (5) hindurchtreten; und
- Bilden von Verbundzonen zwischen aneinander liegenden Schichten (6', 6", 6"') an den Kreuzungsbereichen der kontinuierlichen Erhebungen auf den Walzenmänteln.

2. Ein Laminierverfahren gemäß Anspruch 1, wobei die Mäntel der Walzen (1, 2) auf die selbe Temperatur aufgeheizt werden.

3. Ein Laminierverfahren gemäß Anspruch 1 oder 2, wobei die besagten, unterschiedlichen Neigungswinkel zwischen 0° und 90° liegen.

4. Ein Laminierverfahren gemäß einem der Ansprüche 1 bis 3, wobei die Erhebungen derart konfiguriert sind, dass diejenige theoretische Ebene, in welcher Paare der erzeugenden Linien für die Erhebungen auf den zylindrischen Oberflächen der Mäntel der beiden Walzen (1, 2) liegen, die im Bereich des Laminierspaltes (5) einander zugewandt sind, eine Mehrzahl von Kreuzungsbereichen der besagten, kontinuierlichen Erhebungen schneidet.

5. Ein Laminierverfahren gemäß Anspruch 4, wobei die besagten Nuten (7, 8) kontinuierliche, schraubenförmige Erhebungen auf den Mänteln ihrer jeweiligen Walzen (1, 2) bilden.

6. Ein Laminierverfahren gemäß Anspruch 5, wobei die kontinuierlichen, schraubenförmigen Erhebungen die selbe Steigung und entgegengesetzte Windungsrichtungen auf den Mänteln der beiden Walzen (1, 2) haben.

7. Ein Laminierverfahren gemäß Anspruch 5, wobei die kontinuierlichen, schraubenförmigen Erhebungen die selbe Steigung und die selben Windungsrichtungen auf den Mänteln der beiden Walzen (1, 2) haben.

## Revendications

1. Procédé pour laminer à chaud des produits multicouches (6) comprenant au moins une couche de barrière (6") formée avec un film réalisé à partir d'un matériau polymère thermoplastique imperméable au liquide et au moins une couche perméable à l'air (6', 6"') réalisée avec un tissu non tissé réalisé à partir de fibres polymères thermoplastiques, dans lequel lesdites couches (6', 6", 6"') sont laminées à chaud au moyen d'une calandre comprenant une paire de cylindres contrarotatifs (1, 2) avec des axes parallèles, dont les surfaces de manteau définissent un espace de laminage (5) entre elles, ledit procédé comprenant les étapes consistant à :
- former des modèles de gaufrage sur les surfaces de manteau des deux cylindres (1, 2), chaque modèle de gaufrage comprenant des rainures (7, 8) définissant entre elles des reliefs continus sur les manteaux des deux cylindres (1, 2) s'étendant de manière linéaire à des angles d'inclinaison différents ou complémentaires par rapport aux axes des cylindres respectifs, comme on peut l'observer sur une vue de dessus des cylindres ;
- chauffer lesdits cylindres (1, 2) à une température suffisante pour ramollir le matériau polymère des couches (6', 6", 6"') pincées aux croisements desdits reliefs continus des manteaux des deux cylindres (1, 2) lorsque les couches passent à travers ledit espace de laminage (5) ; et
- former des zones de liaison entre les couches (6', 6", 6"') au niveau desdits croisements des reliefs continus des manteaux de cylindre.

2. Procédé de laminage selon la revendication 1, dans lequel les manteaux des cylindres (1, 2) sont chauffés à la même température.

3. Procédé de laminage selon la revendication 1 ou 2, dans lequel lesdits différents angles d'inclinaison sont compris entre 0° et 90°.

4. Procédé de laminage selon l'une quelconque des revendications 1 à 3, dans lequel les reliefs sont configurés de sorte que le plan théorique sur lequel se trouvent des paires de lignes de génération de reliefs des surfaces cylindriques des manteaux des deux cylindres (1, 2) qui se font face au niveau de l'espace de laminage (5), coupe une pluralité de croisements desdits reliefs continus.

5. Procédé de laminage selon la revendication 4, dans lequel lesdites rainures (7, 8) forment des reliefs hélicoïdaux continus sur les manteaux de leurs cylindres (1, 2) respectifs.

6. Procédé de laminage selon la revendication 5, dans lequel lesdits reliefs hélicoïdaux continus ont le même écartement et des sens d'enroulement opposés sur les manteaux des deux cylindres (1, 2).

7. Procédé de laminage selon la revendication 5, dans lequel lesdits reliefs hélicoïdaux continus ont le même écartement et les mêmes sens d'enroulement sur les manteaux des deux cylindres (1, 2).
